# EUROPEAN PATENT APPLICATION

(11) **EP 1 345 355 A2**
(43) Date of publication of application: **17.09.2003**
(21) Application number: 03004398.8
(22) Date of filing: 03.03.2003
(51) Int. Cl.: H04L 12/24

(54) **Apparatus and method for controlling devices in a sub-network of a home-network**

(30) Priority: 11.03.2002 KR 2002012986
(71) Applicant: SAMSUNG ELECTRONICS CO., LTD., Suwon-City, Kyungki-do (KR)
(72) Inventor: Choi, Moon-jeong, 249-1806, Ssangyong Apartment, Paldal-gu, Suwon-city, Gyunggi-do (KR)
(74) Representative: Grünecker, Kinkeldey, Stockmair & Schwanhäusser Anwaltssozietät

(57) **Abstract**

Provided is an apparatus for controlling devices in a sub-network in a home-network, and the method thereof. A message processing unit transmits a registration request message received from a domestic device to a master server and responds to a polling message checking whether the domestic device is in an active mode or not. An information registration unit provides service information received from the domestic device in the sub-network and/or the updated service information, to the master server. An information generation unit controls the domestic device in the sub-network based on the service information and generates management information in a web page format. An information providing unit provides the control and management information generated via a user-based interface. A command converting unit converts and provides a command-based command between the domestic-network and the sub-network.

## Description

### BACKGROUND OF THE INVENTION

### 1. Field of the Invention

The present invention relates to an apparatus for controlling devices in a sub-network of a home-network and a method thereof, and more particularly, to an apparatus for controlling the devices in the sub-network having a different middleware structure and a method thereof. The present application claims priority based on Korean Patent Application No. 2002-12986 filed on March 11, 2002, which is incorporated herein by reference.

### 2. Description of the Related Art

Domestic devices can be divided into information devices such as a personal computer, a fax machine, a scanner, and a printer, A/V devices such as a television, a set-top box, a DVD, a VCR, an audio system, a camcorder, and a domestic game system, control devices such as a coffee maker, an electric rice cooker, a refrigerator, a washing machine, a microwave oven, and a camera, and dummy devices such as a remote controller, an interphone, a sensor, and a lighting device. These devices are connected to a sub-network such as a telephone line, a wireless LAN, a blue tooth network, USB network, an IEEE1394 network, and a power line.

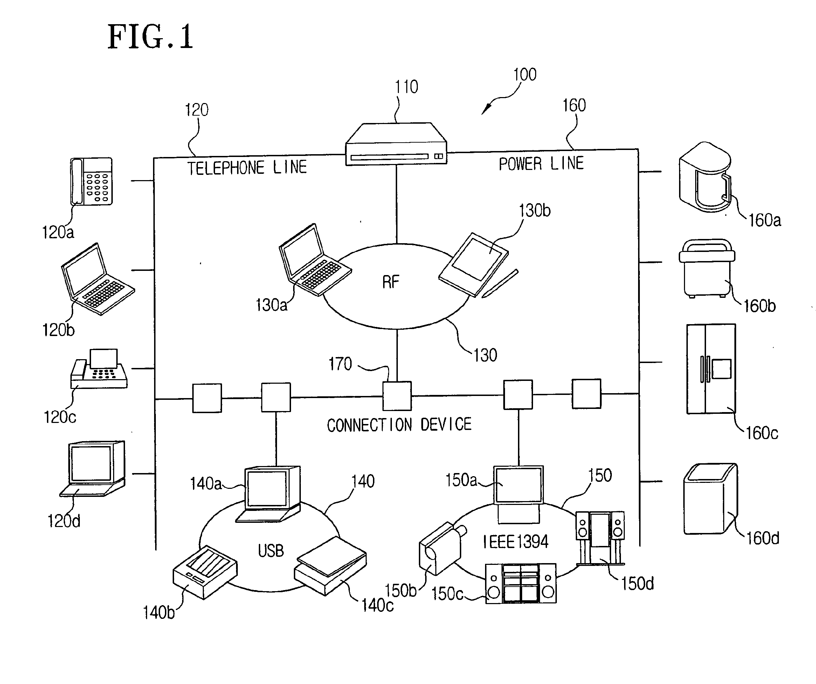

Fig. 1 is a drawing showing a general home-network structure.

Referring to Fig. 1, a telephone 120A, a notebook computer 120B, a fax machine 120C and a computer 120D are connected to a telephone line 120 and these devices form an independent network. To the wireless LAN or the blue tooth network 130, a notebook computer 130A and a PDA 130B are connected. To the USB network 140, a computer 140A, a printer 140B and a scanner 140C are connected. The IEEE1394 network 150 includes a communication protocol for A/V devices and a television 150A, a camcorder 150B and an audio system 150C are connected to it. To a power line 160, control devices such as a coffee maker 160A, an electric rice cooker 160B, a refrigerator 160C, and a washing machine 160D are connected. These subnetworks 120, 130, 140, 150, and 160 are connected to each other by connection devices 170 such as a bridge and comprise a home-network 100. A gateway 110 provides a path connecting the devices in the sub-network to the external networks.

However, since the conventional home-network 100 uses existing networks such as the telephone line and the power line, and new networks such as a blue tooth network and a wireless LAN together, and these devices are operated in different hardware and software platforms, it is not easy to form a home-network using a single system. Accordingly, as a method of structuring a home-network, the establishment of a common virtual computing environment, which is called a middleware, for the domestic devices and the provision of an application are suggested.

The currently suggested middleware only provides a means of control using an independent mechanism for devices having particular common characteristics. Therefore, a unified control of the domestic devices having various characteristics is not easy.

### SUMMARY OF THE INVENTION

The present invention is developed to provide an apparatus for controlling devices in a sub-network capable of a unified control of the domestic devices having various characteristics and a method of the same by flexibly connecting devices in a sub-network of a home-network and other devices in a home-network.

The apparatus for controlling devices in the sub-network of the home-network according to the present invention for achieving the above object has a message processing unit for transmitting a registration request message received from a domestic device to a master server and responding to a polling message checking whether the domestic device is in an active mode or not, an information registering unit for providing service information received from the domestic device in the sub-network and/or the updated service information to the master server, an information generating unit for generating the information on controlling and managing the domestic device in the sub-network based on the service information, in a web page format, and an information providing unit for providing the control and management information generated via a user-based interface.

Preferably, the apparatus for controlling devices in the sub-network of the home-network further comprises a command converting unit for converting a command transmitted between a domestic-network and the sub-network via a command-based interface.

Preferably, the service information includes at least one of a type of domestic device, a manufacturer, location information, a device recognition name, and a device control command list.

In order to achieve other objects, the method for controlling devices in the sub-network of the home-network according to the present invention comprises the steps of a) providing service information on a domestic device, b) providing the service information to a master server, c) receiving a control command about a particular domestic device chosen by a user, from the master server, and d) converting the control command to a command for the particular domestic device.

Preferably, in the step (a), the service information is converted into an XML format and saved in a saving means.

Preferably, in the step (b), the service information is provided in a web page format.

Preferably, the service information includes at least one of a type of domestic device, a manufacturer, location information, a device recognition name, and a device control command list.

### BRIEF DESCRIPTION OF THE DRAWINGS

The aforementioned object and characteristics of the present invention will be more apparent by describing a preferred embodiment of the present invention with reference to the accompanying drawings, in which:

Fig. 1 is a drawing showing a general home-network structure;

Fig. 2 is a drawing showing a home-network structure having an apparatus for controlling devices in a sub-network according to the present invention;

Fig. 3 is a drawing showing a protocol stack of a home-network using a middleware;

Fig. 4 is a block diagram showing the inner structure of a proxy server which is a control device of a sub-network according to the present invention;

Fig. 5 is a flow chart showing a control process of devices in a sub-network according to the present invention; and

Fig. 6 is a flow chart showing a control process of a sub-network when a service request is not input from the sub-network in the step S530 of Fig. 5.

### DETAILED DESCRIPTION OF THE PREFERRED EMBODIMENT

Hereinafter, a preferred embodiment of an apparatus for controlling devices in a sub-network of a home-network and a method thereof according to the present invention will be described in greater detail with reference to the accompanying drawings. The same reference number in each drawing shows the same structural element.

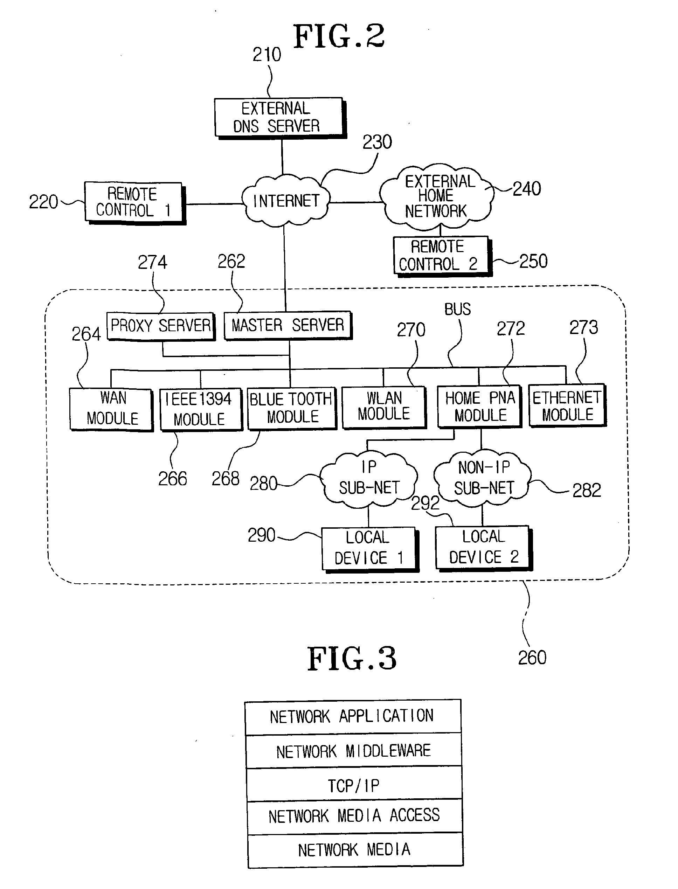

Fig. 2 is a drawing showing a home-network structure having an apparatus for controlling devices in a sub-network according to the present invention.

Referring to Fig. 2, the whole network is comprised of an external network and a home-network 260. The external network has an external DNS server 210 connected to the internet 230, a remote controller 1 220 and an external home-network 240. To the external home-network 240, a remote controller 2 250 is connected.

The external DNS server 210 enables external connection to the home-network 260, as the home network 260 has a global IP address that is allocated in a uniform resource locator (URL) of the home-network 260, registered by the master server 262 of the home-network 260, and saved.

The home-network 260 comprises the master server 262, a Wide Area Network (WAN) module 264, an IEEE1394 module 266, a blue tooth module 268, a Wireless Local Area Network (WLAN) module 270, a home phoneline networking alliance (HomePNA) module 272, and an Ethernet module 273. Each module 264 to 273 is connected to the master server 262 through a bus.

The WAN module 264, the IEEE1394 module 266, the blue tooth module 268, the WLAN module 270, the HomePNA module 272, and the Ethernet module 273 are provided with a means that receives data from devices communicating by each protocol or transmits data to relevant devices. A detailed description on these modules and a communication process between the devices connected to each module will be omitted since those skilled in the art will already have knowledge of them.

To the HomePNA module 272 is connected an IP sub network 280 and a non-IP sub network 282. The IP sub network 280 is comprised of an intelligent device, i.e., a local device 1 290, and the non-IP sub network 282 is comprised of a non-intelligent device, i.e., a local device 2 292 such as a dummy device. The dummy devices do not have self controllability and are devices such as an electric light, a door and a washing machine which operate according to simple principles. It is not shown in the drawings but the IP sub network and non-IP sub network can also be connected to other modules.

The master server 262 is an access node enabling the home-network 260 to communicate with an external network 240 such as other home-networks and the internet 230. Therefore, in the master server 262, conversion between a private IP address allocated to the home-network device and a global IP address used in the external network, such as the internet, occurs.

The master server 262 processes the data transmitted from or to each module. Also, the master server 262 provides information on devices through a network. In order to do that, the master server 262 manages the information on the devices inside the home-network 260 and provides information on the registered devices by replying to the request for information about the devices. In addition, as the master server 262 manages the private IP addresses allocated to the devices within the home-network 260, all nodes inside the home-network can exchange information regardless of the network media interface. Furthermore, the master server 262 enables communication between the home-network and the external device by registering the home-network and the global IP address allocated to the URL of the home-network with the external DSN server 210. The description of the master server 262 performing the function of a gateway is disclosed in the drawings and above, but the gateway can be disposed as a device separate from the master server 262.

The master server 262 has a DNS server (not shown) and a dynamic host configuration protocol (DHCP) server (not shown). The DNS server and the DHCP server can be disposed separately from the master server 262.

The DNS server provides a host name to a device in the home-network 260. The host name of the device in the home-network 260 may be given by a user or the device may use a pre-determined default name to indicate a functional meaning of the device. When the same default name already exists, extended numbers are added. The host name is used to request for assignment of the private IP address of the device to the DHCP server. The DHCP server provides a unique identifier, i.e., a private IP address, to devices in the home-network 260.

The proxy server 274 converts the service in the application level in order to transmit the service using the IP networking to the non-IP node. The proxy server 274 enables each device to have the private IP address allocated from the DHCP server for each device (hereinafter called a non-IP device) connected to the non-IP serve net 282 in order to connect the device which does not support the TCP/IP to the home network.

In addition, the proxy server 274 is aware of the status of the non-IP node. In other words, the proxy server 274 manages the information on the status of the non-IP node whether the power is on or not, or whether it is inserted in the home-network or not. Furthermore, the proxy server 274 manages the private IP addresses having being allocated for the non-IP device and the information on the relationship between the private IP addresses of a number of non-IP devices and their hardware addresses.

The proxy server 274 provides information on each device and control movements of a device in the non-IP sub network 282, to the remote controller 220, 250 connected to the local device 1 290 in the home-network 260 or to the internet 230, through the master server 262. In the drawing, it is shown that the proxy server 272 is disposed separately from the master server 262 but it can be unified with the master server 262. Hereinafter a network having an independent structure like the non-IP sub network 282 will be called a sub-network.

The devices in the home-network are defined as the service clients when they require connections to other devices, and are defined as the service servers when the connection is requested by other devices. The service server awaits a service client's request with an open access point and gets connected upon entry of the service client's request.

The devices connected to the home-network can either be service servers or service clients according to a connection request and connection provision. The decision on whether the devices are to be used as service clients or service servers is made according to the operation condition of each device in the home-network. In other words, when a device is connected to the DHCP and demands allocation of a private IP address, the device becomes a service client and the DHCP becomes a service server. However, when the device provides its own operation with other device's request, the device becomes a service server.

The interface of the service server and the service client are divided into a direct interface and an indirect interface. The direct interface is a service server and a service client directly providing and receiving a data unit through an IP networking pass, and the indirect interface is a service for providing and receiving a data unit through a proxy server 274 between a service server and a service client in case the service server is a non-IP node.

Fig. 3 is a drawing showing a protocol stack of a home-network using a middleware.

The middleware is software for communications between devices in different categories and enables communication between a number of devices. The middleware is located in between an operating system and an application program and transparently connects the scattered application and data in the client server environment. The middleware is also software independently connecting a various communication protocol, system structure, an operating system, database and an application program to hardware through the network in order to support them. This middleware can have a Transmission Control Protocol / Internet Protocol (TCP/IP) as a back-bone network.

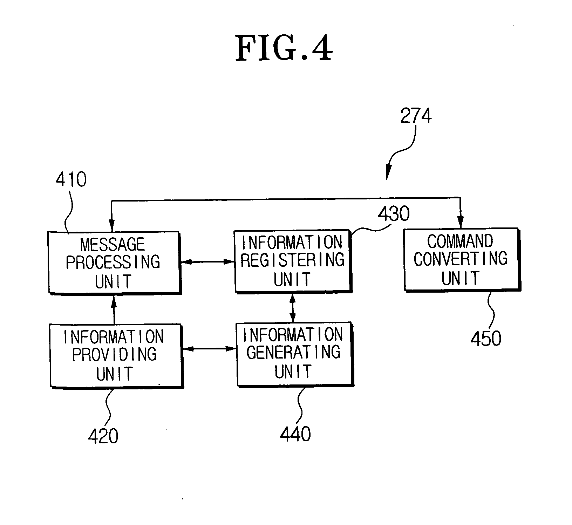

Fig. 4 is a block diagram showing the inner structure of a proxy server according to the present invention.

Referring to Fig. 4, the proxy server 274 has a message processing unit 410, an information providing unit 420, an information registering unit 430, an information generating unit 440, and a command converting unit 450.

The message processing unit 410 transmits a request message about the service information of devices in the sub-network and replies to a polling message. The message processing unit 410 acts as a mediator transmitting a reply message in regard to the polling message to the master server.

The information providing unit 420 is a structural element acting as a web server and a web browser in the proxy server 274. The information providing unit 420 provides user-device (U2D) base control and management service for the devices in the sub-network such as a non-IP sub network 282. Also, the information providing unit 420 requests a device to perform according to the command through the message processing unit 410 and the command converting unit 450 for performing the command received from the user connected to the proxy server 274 using a domestic web browser.

The information registering unit 430 receives service information on the device in the sub-network, for example, a type of a device, a manufacturer, location of a device, a device recognition name in the home-network, and a device control command list, and provides the service information to the master server 262. Also, the information registering unit 430 updates service information by checking the changes of each device. Furthermore, the information registering unit 430 processes the message, i.e., service quality of the sub-network received from the message processing unit 410 or provides service information based on the request of the information providing unit 420. While the information registering unit 430, according to the preferred embodiment, is described to interface only with the message processing unit 410 and the information providing unit 420, it may also interface with other parts.

The information generating unit 440 dynamically generates a web page about the information on the sub-network or devices in the sub-network and provides it to the information providing unit 420. "Being dynamic" means not processing data in a fixed format but processing data in a new format according to a logical basis. In order for that to occur, the information generating unit 440 uses an extensible markup language (XML) technology such as an XML parser.

The command converting unit 450 performs services in connection with the devices in the sub-network. The process mechanism of a domestic-network and that of a sub-network are different to each other. Therefore, the command converting unit 450 converts the command-based command between the domestic-network and the sub-network.

The proxy server 274 described above can 1) drive the devices in the sub-network to service on the basis of the Graphic User Interface (GUI) inside and outside of the home, 2) drive the devices in the sub-network to service on the command basis inside and outside of the home, 3) connect and drive the devices in the sub-network to service inside and outside of the home on the basis of the GUI, 4) connect and drive the devices in the sub-network to service inside and outside of the home on the command basis, and 5) function as a service client in the home-network on the basis of the GUI.

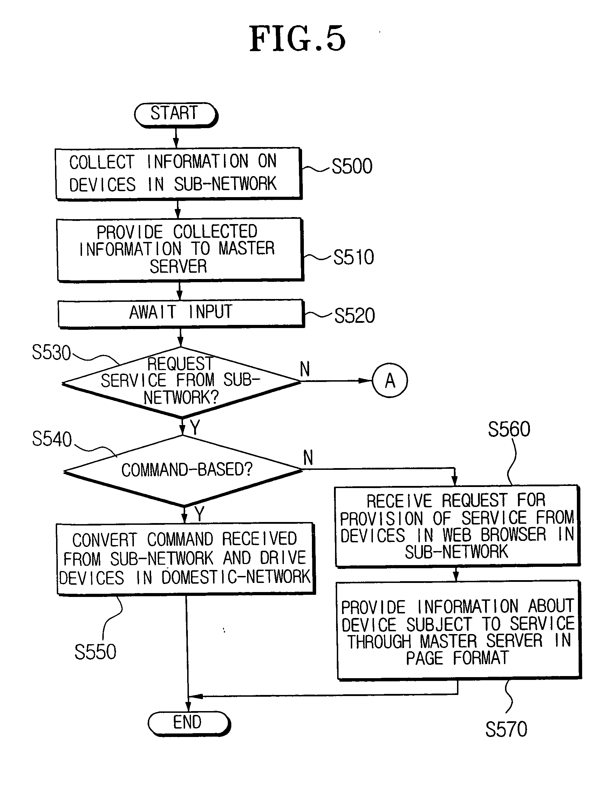

Fig. 5 is a flow chart showing the control process of the devices in the sub-network according to the present invention.

Referring to Fig. 5, the message processing unit 410 receives a request for registration from the devices in the sub-network and collects the service information, for example, a type of a device, a manufacturer, the location of a device, a device recognition name in the home-network, and a device control command list, included in the registration request message received from the information registering unit 430 (S500). When the collection of the service information on devices is complete, the message processing unit 410 provides the service information to the master server 262 (S510), and awaits input from a user or a local device 290, 292 (S520).

The proxy server 274 provides service according to the input path of the service request after confirming the input of the service request from the sub-network (S530). The service request from the sub-network is made on based on a GUI and based on a command. If the service request is made based on the GUI, the service request is input to the information providing unit 420. On the other hand, if the service request is made based on the command, the service request is input to the command converting unit 450.

If the service request is based on a command (S540), the command converting unit 450 converts the command received from the sub-network into the command of the domestic-network and sends it to the message processing unit 410, and the message processing unit 410 outputs a message instructing an operation according to the command and drives devices in the domestic-network (S550). On the other hand, if the service request is based on a GUI, the service provision will be requested from the web browser in the sub-network (S560). The information providing unit 420 provides a master page in the web page format or a lower page about each device (S570). The master server 262 provides a user with web page formatted pages provided from the information providing unit 420.

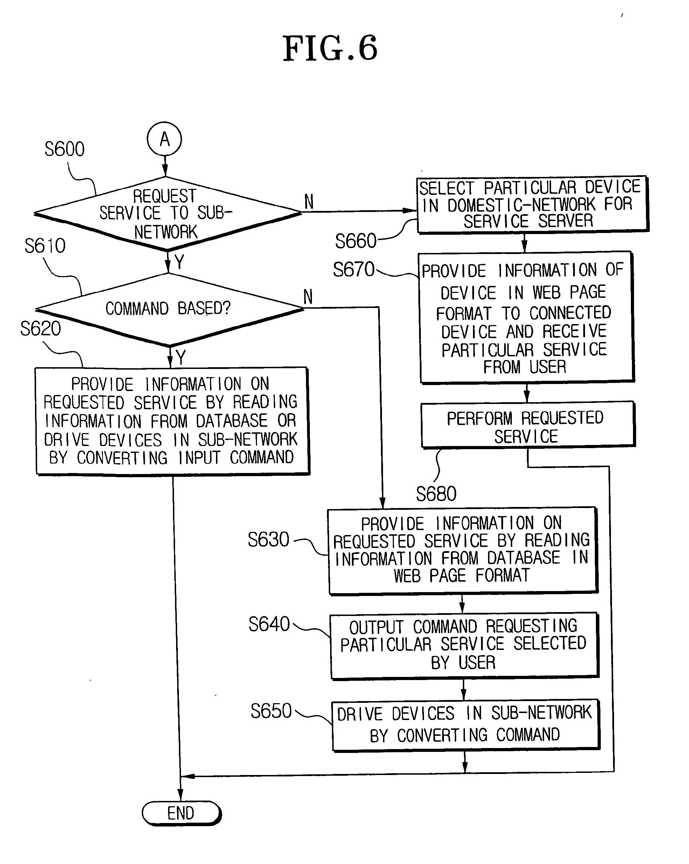

Fig. 6 is a flow chart showing the control process of the sub-network when the service request is not input from the sub-network in step S530.

Referring to Fig. 6, if a service request is made from inside or outside of the domestic-network, the proxy server 274 confirms whether it is directed to the sub-network (S600). If it is confirmed that the service request has been transmitted from the inside and outside of the domestic-network to the sub-network, then it is confirmed whether the service request has been input to the message processing unit 410 (S610). A service request that has been input to the message processing unit 410 is made based on a command. In this case, the message processing unit 410 drives the devices in the sub-network according to the service request (S620).

In the step S610, when a service request is input to the information providing unit 420, the service request is made based on the GUI. In this case, the information providing unit 420 requests the information generating unit 440 to provide information on the devices in the sub-network and the information generating unit 440 converts the device information provided from the information registering unit 430 into the web page format and provides it to the master server 262 (S630). The information providing unit 420 requests the performance of the service from the message processing unit 410, when it receives a request for a particular service chosen by the user reading the web page formatted information from the master server 262, and the message processing unit 410 requests for the output of a command to the command converting unit 450 for driving devices in the sub-network (S640). The command converting unit 450 converts the command received from the message processing unit 410 into a command suitable for the sub-network, and drives the devices in the sub-network (S650).

Meanwhile, when it is confirmed that the service request is not for the sub-network at the step S600, the proxy server 274 operates as a service client in the domestic-network. In this case, a device in the domestic-network is designated to operate as a service server of the proxy server 274 (S660). The user confirms the service provided from the service server of the proxy server 274 and then selects a desired service (S670). The proxy server 274 requests the service server to provide the service selected by the user (S680). The series of these service providing processes are performed by the information providing unit 420.

Hereinbefore, an apparatus for controlling devices in a sub-network according to the present invention and a home-network having a domestic-network and a sub-network in a one to one structure and a method thereof are described. However, the present invention is also applicable to a home-network having a domestic-network and a sub-network in a one to multiple structure. The proxy server is disposed separately in the present invention but it can also be unified with the master server.

According to the apparatus for controlling devices in the sub-network and the method thereof according to the present invention, each different middleware device can be controlled together and continuous service of devices in the sub-network can be provided to a user in the inside and outside of the domestic-network.

Although the preferred embodiments of the present invention have been described, it will be understood by those skilled in the art that the present invention should not be limited to the described preferred embodiments. Various changes and modifications can be made within the sprit and scope of the present invention as defined by the appended claims.

## Claims

1. An apparatus for controlling devices in a sub-network of a home-network comprising:
a message processing unit for transmitting a registration request message received from a domestic device to a master server and responding to a polling message checking whether the domestic device is in an active mode or not;
an information registration unit for providing at least one of service information and updated service information, received from the domestic device in the sub-network, to the master server;
an information generation unit for generating control and management information for the domestic device in the sub-network, based on at least one of the service information and the updated service information; and
an information providing unit for providing the control and management information.

2. The apparatus according to claim 1, wherein the control and management information is in a web page format and is generated via a user-based interface.

3. The apparatus according to claim 1, further comprising a command converting unit for converting a command transmitted between a domestic device and the sub-network, via a command-based interface

4. The apparatus according to claim 1, wherein the service information comprises at least one of a type of domestic device, a manufacturer, location information, a device recognition name, and a device control command list.

5. A method for controlling devices in a sub-network of a home-network comprising the steps of:
(a) providing service information on a domestic device;
(b) providing the service information to a master server;
(c) receiving a control command about a particular domestic device, from the master server; and
(d) converting the control command to a command for the particular domestic device.

6. The method according to claim 5, wherein the particular domestic device is chosen by a user.

7. The method for controlling devices according to claim 4, wherein in the step (a), the service information is converted into an extensible markup language (XML) format and saved in a saving means.

8. The method for controlling devices according to claim 4, wherein in the step (b), the service information is provided in a web page format.

9. The method for controlling devices according to claim 4, wherein the service information comprises at least one of a type of domestic device, a manufacturer, location information, a device recognition name, and a device control command list.
